Europäisches Patentamt

(19) European Patent Office

Office européen des brevets

(11) EP 0 816 687 A2

(12) **EUROPEAN PATENT APPLICATION**

(43) Date of publication:
07.01.1998 Bulletin 1998/02

(51) Int. Cl.⁶: **F04D 29/28**

(21) Application number: 97103354.3

(22) Date of filing: 28.02.1997

(84) Designated Contracting States:
DE ES FR GB GR IT

(30) Priority: 28.06.1996 JP 170426/96

(71) Applicant:
KABUSHIKI KAISHA TOSHIBA
Kawasaki-shi, Kanagawa-ken 210 (JP)

(72) Inventors:
• Nagamori, Afira
Fuji-shi, Shizuoka-ken (JP)

• Konno, Satoru
Fuji-shi, Shizuoka-ken (JP)
• Kobayashi, Yoichiro
Fuji-shi, Shizuoka-ken (JP)

(74) Representative:
Zangs, Rainer E., Dipl.-Ing. et al
Hoffmann Eitle,
Patent- und Rechtsanwälte,
Arabellastrasse 4
81925 München (DE)

(54) **Transverse fan, fan impeller forming mold, and manufacturing method of fan impeller forming mold**

(57) A transverse fan is formed by concentrically arranging a plurality of fan impellers for integrally rotating the plurality of fan impellers around a fan axis. Each of the plurality of fan impellers comprises a plate and a plurality of blades each having a bottom end portion mounted on one side surface of the plate, a leading end portion opposite to the bottom end portion and a side surface portion connecting the leading end portion and the bottom end portion. Each of the blades is annularly arranged around the fan axis so that each of the blades is inclined at a predetermined angle along to the rotating direction with respect to the fan axis. The side surface portion of each of said blades includes an outer edge portion which is the farthest portion from the fan axis in the side surface portion and an inner edge portion which is the closest portion to the fan axis in the side surface portion. The outer edge portion and inner edge portion are curved outward with respect to the fan axis, respectively.

FIG. 1

FIG. 2

Printed by Xerox (UK) Business Services
2.15.7/3.4

EP 0 816 687 A2

**Description**

BACKGROUND OF THE INVENTION

Field of the Invention

The present invention relates to a transverse fan applied to a room fan or the like of an air conditioner, a mold for forming the transverse fan, and a manufacturing method of the forming mold. More particularly, the present invention relates to a transverse fan having tilting skew blades, a forming mold for the fan impellers used for the transverse fan, and a manufacturing method for the fan impeller forming mold.

Description of the Prior Art

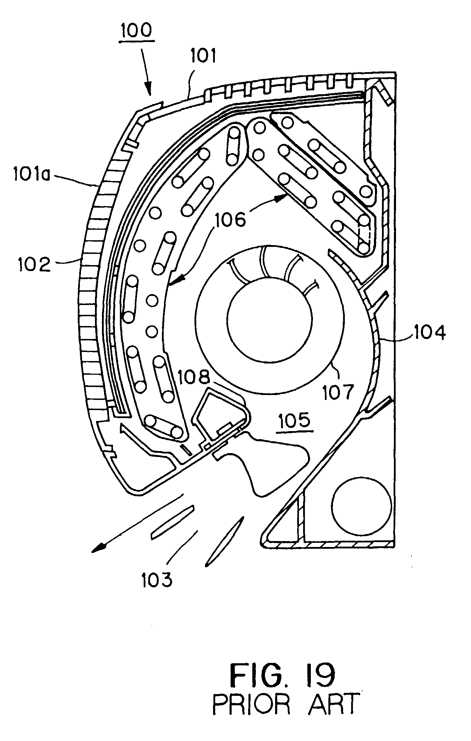

In general, as an example of an air conditioner in which this type of transverse fan is built in, there is one shown in Fig. 19. According to Fig. 19, a front surface 101a of a main body casing 101 of an indoor unit 100 has a suction grille 102 and a blow-out grille 103 disposed vertically at the upper and lower portions of Fig. 19. These suction grille 102 and the outlet grille 103 are communicated through a passage 105 in a fan casing 104.

In this passage 105, a transverse fan 107, serving as an indoor fan, is provided downstream from an indoor heat exchanger 106. The indoor air which has been sucked into the main body casing 101 through the suction grille 102 is subjected to heat exchange in the indoor heat exchanger 106. The cool air or hot air is sent inside of the room by the transverse fan 107 through the blow-out grille 103 thereby cooling or heating the inside of the room.

In achieving higher performance of the foregoing air conditioner, it has been demanded especially to reduce an abnormal noise when blowing the cool air or hot air. The abnormal noise is primarily attributable to a whirl produced in the gap between a nose 108 and the transverse fan 107 or in the vicinity thereof due to changes in pressure. The whirl causes the abnormal noise known as a blade pitch noise. It is increasingly becoming important to reduce the abnormal noises including the blade pitch noise.

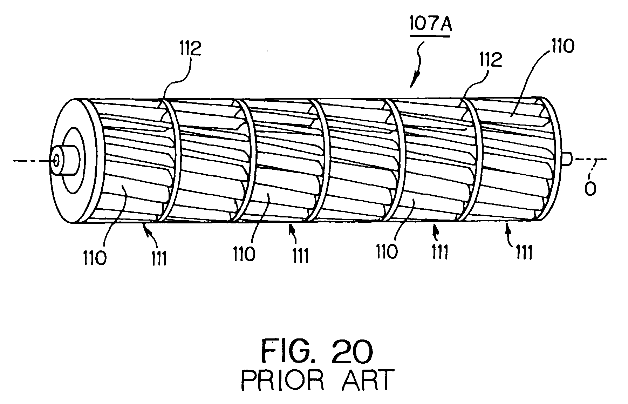

As corrective manners for reducing the abnormal noises such as the blade pitch noise, there has been known a transverse fan 107A illustrated in Fig. 20. Blades 110 of the transverse fan 107A are disposed such that they are so disposed as to be inclined with a predetermined angle with respect to a fan axis O, respectively. These blades 110 are referred to as tilting skew blades, whereas the blades 110 which are disposed in parallel to the fan axis O are referred to as straight blades. The transverse fan 107A is composed of a plurality of fan impellers 111 provided with a plurality of blades 110, the fan impellers 111 being concentrically fixed. According to this configuration, since the blades 110 are so disposed as to be inclined with a predetermined tilt angle, the whirl (changes in pressure) produced between the blades 110 and the nose 108 can be dispersed so as to reduce the blade pitch noise.

It is also known to provide the plurality of tilting skew blades 110 on partitioners 112 at a plurality of different intervals (random pitches) to disperse the peak frequency of the rotational noise which has been reduced by the tilting skew blades 110.

As another corrective manner for reducing the abnormal noise such as the blade pitch noise, there has been known a configuration wherein the blades are arranged helically at a predetermined twist angle and in a twist direction with respect to the fan axis O (hereinafter, the blades will be referred to as "helical skew blades" and a fan which has the helical skew blades will be referred to as a " helical skew fan"). This configuration also provides the dispersion effect at the whirl described above.

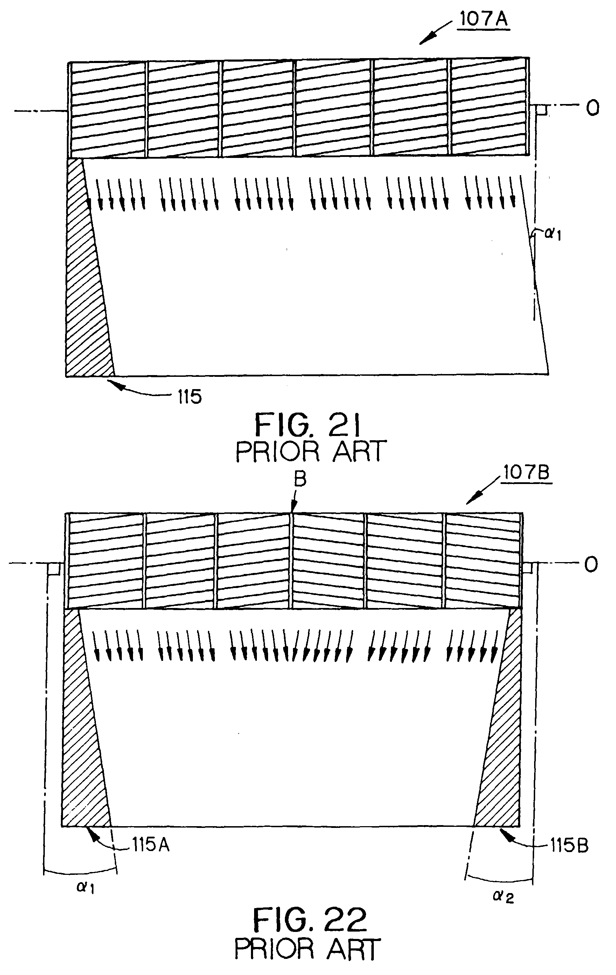

On the other hand, the air blow supplied from the transverse fan 107A which has the foregoing tilting skew blades has run only in a slant direction which always maintains a predetermined angle with respect to the direction orthogonal to the fan axis O as shown in Fig. 21 because the skew tilting angle of the blades of the fan is fixed to a predetermined direction with respect to the fan axis O. Hence, it is difficult to adjust the direction in which the air blows according to applications. Moreover, no air blow is sent to an area 115 of the inside of the room which substantially faces one axial end of the transverse fan 107A (the range 115 is a no air blow range) or the air blow is sent unstably to the range 115 thereof, as illustrated in Fig. 21, failing to provide even and wide air blow.

To cope with the problems, there has been disclosed in Japanese Unexamined Patent Publication No. 5-340380 a configuration wherein the right and left skew tilting directions are changed in a boundary line B which is orthogonal to the fan axis O and which is across the center of the fan axis O of a transverse fan 107B so as to supply the air blow in two different directions, as shown in Fig. 21. For example, the left-hand air blow which is blown from the left-side portion of the transverse fan 107B with respect to the boundary line B of Fig. 22 always runs in a slant direction at the predetermined angle $\alpha_1$ with respect to the direction orthogonal fan axis O, while the right-hand air blow which is blown from the right-side portion of the transverse fan 107B with respect to the boundary line B of Fig. 22 always runs in a slant direction at the predetermined angle $\alpha_2$ therewith.

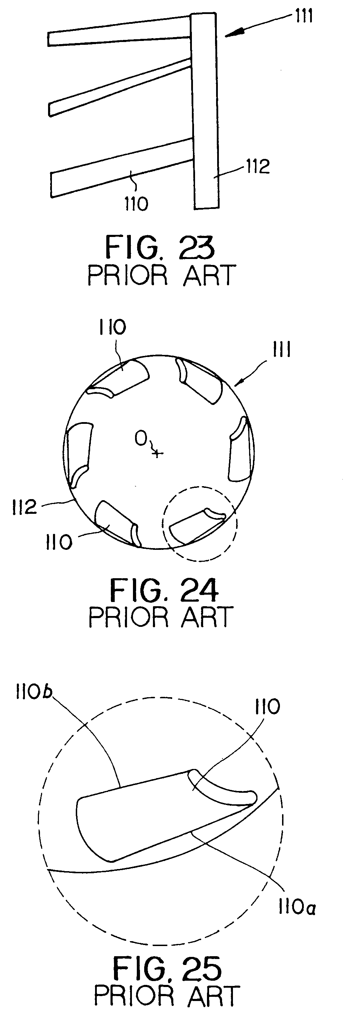

Fig. 23 is a side view of the fan impeller 111 which has the tilting skew blades 110 constituting the transverse fan 107A shown in Fig. 20. Fig. 24 is a view showing the fan impeller from the side of the blades 110 disposed surface thereof. Fig. 25 is an enlarged view of the blade 110 disposed in the fan impeller 111 shown in Fig. 24.

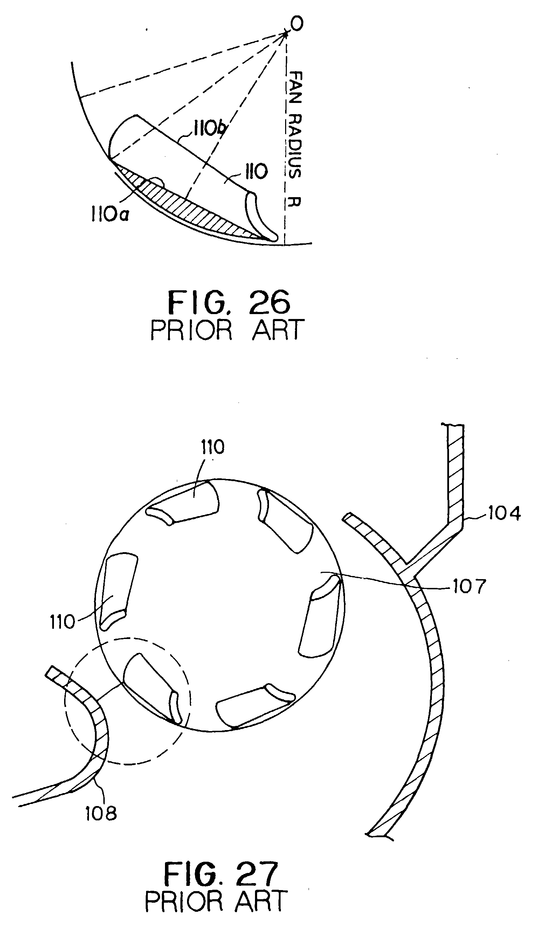

As shown in Fig. 25, in the tilting skew blades, the peripheral edges along the direction in which the blades 110 are so provided as to stand on the blades 110 disposed surface is linearly formed. Here, one of the peripheral edges which is the farthest from the fan axis O is called an outer peripheral edge 110a, while the other which is the closest to the fan axis O is called an inner peripheral edge 110b. Therefore, as shown in Fig. 26, the distance (radius R of the fan) from the fan axis O to the blade outer peripheral edge 110a is smaller at the center of the outer peripheral edge 110a as indicated by the hatched area of Fig. 26. As the outer peripheral edge 110a is farther from the fan axis O, the air blowing performance grows better, and therefore, there has been a problem in that the blower fan which has the tilting skew blades is inferior in air blow volume to the blower fan which has the regular straight blades.

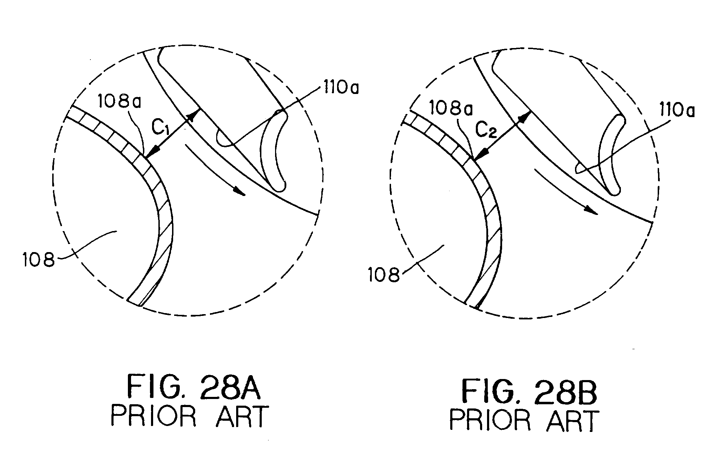

Fig. 27, Figs. 28(A) and 28(B) illustrate the relationship between the peripheral position of the outer peripheral edge 110a and the gap (nose gap) of the nose 108 relative to the outer peripheral edge 110a when the transverse fan equipped with the fan impellers 111 which have the tilting skew blades 110 is rotatably operated. Figs. 28 (A) and 28(B) are enlarged views of the portion indicated by a dashed-line circle in Fig. 27. Figs. 28(A) and 28(B) show different peripheral portions of the blade 110 in relation to the nose 108 resulting from the rotation.

As shown in Fig. 28(A) and Fig. 28(B), the nose gap differs according to the position of the outer peripheral edge 110a in relation to an angular portion 108a of the nose 108 which comes closest to the blade 110. More specifically, it is seen that there is a relationship of "C1 > C2" between a nose gap C1 (refer to Fig. 28(A)) obtained when the nose angular portion 108a reaches a point closest to the central portion of the blade outer peripheral edge 110a according to the fan rotates and a nose gap C2 (refer to Fig. 28(B)) obtained when the nose angular portion 108a reaches a point closest to an end of the blade outer peripheral edge 110a according to the fan rotates.

There is a close relationship between the nose gap and static pressure. That is, in the tilting skew blade, since the nose gap changes as the fan rotates, static pressure distributed along the blade outer peripheral edge direction (in the longitudinal direction) is generated thereby producing the abnormal noise.

In particular, when a transverse fan 107C is constructed using the tilting skew blades 110A which are disposed at random pitches (refer to Fig. 29), the size of whirl W (the radius "r" of the whirl) which is produced between the blades 110A and the nose 108 as shown in Fig. 30 changes in a cycle $\underline{T}$ of an integral multiple of the number of revolutions of the fan (refer to Fig. 31). In addition, the nose gap is changed along to the longitudinal direction of the fan axis O in the transverse fan 107C whereby the change of the size of the whirl (whirl radius "r") due to the random pitches (refer to Fig. 32) increases, the louder abnormal noises are generated.

It has been known that the blade pitch noise restraining effect becomes greater as the skew tilting angle in the tilting skew blades is made larger.

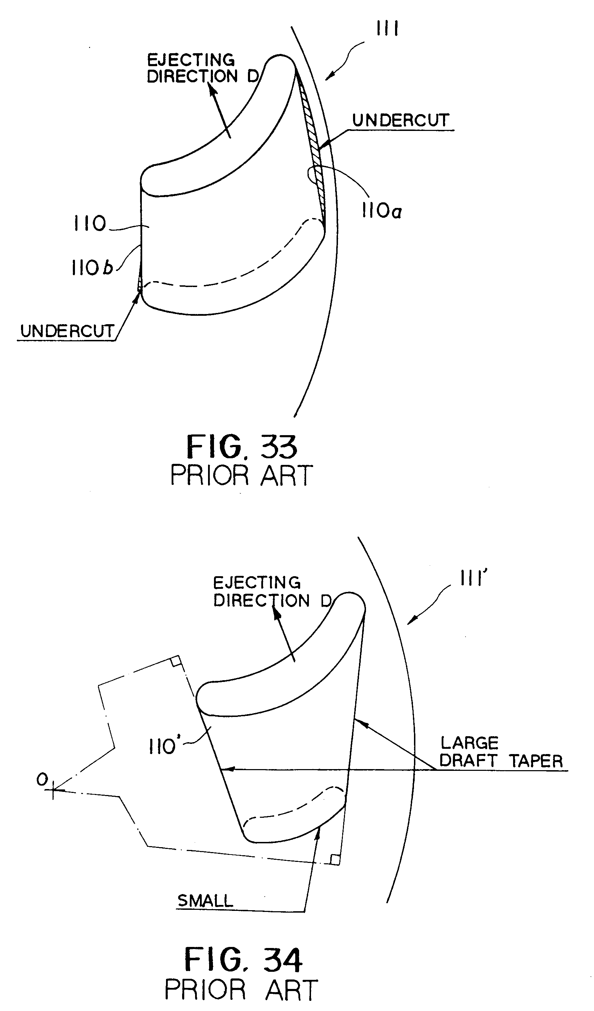

As shown in Fig. 33, however, when the fan impeller 111 which has the tilting skew blades 110 is manufactured by molding and the molded fan impeller (fan impeller 111) is ejected out of a lower die, not shown, the fan impeller is ejected out of the lower die in the blade tilting direction while turning it around the axis thereof (direction D in which it is ejected out is shown in Fig. 33). Therefore, if a skew tilting angle is sufficiently secured and the tilting skew blades are provided with regular drafts (draft tapers), then undercuts are generated on the outer peripheral edge 110a portion and the inner peripheral edge 110b portion of the tilting skew blade 110, respectively due to the turning as shown in Fig. 33, making it difficult to eject the fan impeller out thereof.

In other words, to increase the skew angle, the undercuts attributable to the turning must be obviated. As a method to increase the skew angle while obviating the undercuts, the draft taper of a tilting skew blade 110' could be made larger as illustrated in Fig. 34. This, however, would lose the shape of the skew blade, resulting in deteriorated air blowing performance.

Further, in the conventional helical skew fan, since the blade is formed helically, when the helical skew fan is manufactured by molding, the helically shaped portions of the mold (skew fan) incur undercuts, making it difficult to ejected it out of the lower die and accordingly making it difficult to employ an impeller joint method or other similar methods.

For this reason, in the case of the conventional helical skew fan, the helical skew blades are formed by applying an external force to a general straight (not tilting), metallic and resinous fan to twist it in a predetermined direction; the twist residual stress from the twist given by the external force stays in the fan, leading to deteriorated reliability of the fan.

The transverse fan having the configuration which has been disclosed in Japanese Unexamined Patent Publication No. 5-340380 is capable of supplying air blows in two different directions. However, it has been posing the problem in that no air blow is sent to areas 115A and 115B of the inside of the room each of which faces each ends of the transverse fan 107B or the air blow is sent unstably to the areas 115A and 115B thereof, as shown in Fig. 22, causing a surging phenomenon. Even if the tilting direction were reversed at the right and left so as to laterally expand the air blow, the air blow from the central area which includes the boundary line B along the central axis of the transverse fan 107B would be decreased, developing the surging phenomenon after all.

## SUMMARY OF THE INVENTION

The present invention has been made in view of the foregoing problems above so as to overcome the foregoing problems. Accordingly, it is an object of the present invention to provide a transverse fan which is capable of effectively reducing noises such as blade pitch noises while retaining high air blowing capability, a fan impeller forming mold for forming a fan impeller constituting the transverse fan which has such an advantage, and a method for manufacturing the fan impeller forming mold.

Another object of the present invention is to provide a transverse fan which is capable of providing an even, wide air blow area and good blow without developing a surging problem.

In order to achieve the such objects, according to one aspect of the present invention, there is provided a transverse fan formed by concentrically arranging a plurality of fan impellers for integrally rotating the plurality of fan impellers around a fan axis; each of said plurality of fan impellers comprising a plate and a plurality of blades each having a bottom end portion mounted on one side surface of the plate, a leading end portion opposite to the bottom end portion and a side surface portion connecting the leading end portion and the bottom end portion, each of said blades being annularly arranged around the fan axis so that each of the blades is inclined at a predetermined angle along to the rotating direction with respect to the fan axis,

characterized in that said side surface portion of each of said blades includes an outer edge portion which is the farthest portion from the fan axis in the side surface portion and an inner edge portion which is the closest portion to the fan axis in the side surface portion, said outer edge portion and inner edge portion being curved outward with respect to the fan axis, respectively.

In preferred embodiments of this aspect, each of the blades has a circular-arc shape in cross section along to a direction orthogonal to the fan axis.

This aspect of the present invention has an arrangement that the outer edge portion of each of said blades is formed on the basis of a first locus drawn by using a line segment Rout0 as a radius of curvature and of a predetermined draft taper, said line segment Rout0 connecting an end of the leading end side of the outer edge portion and the fan axis and said inner edge portion of each of said blades is formed on the basis of a second locus drawn by using a line segment Rin0 as a radius of curvature and of a predetermined draft taper, said line segment Rin0 connecting an end of the leading end side of the inner edge portion and the fan axis.

This aspect of the present invention has an arrangement that when angle ($\theta$) from Rout0 with reference to the fan axis is taken as a variable, said first locus ( Rout ($\theta$)) of the outer edge portion of each of blades with respect to the fan axis is formed on the basis of the Rout0 and the draft taper fout ($\theta$) so as to satisfy the following expressions:

$$Rout (\theta) < Rout0 - fout (\theta)$$

$$\partial\, fout (\theta) / \partial\theta > 0$$

and that when angle ($\theta$) from Rin0 with reference to the fan axis is taken as a variable, said second locus ( Rin ($\theta$)) of the inner edge portion of each of blades with respect to the fan axis is formed on the basis of the Rin0 and the draft taper fin ($\theta$) so as to satisfy the following expressions:

$$Rin (\theta) > Rin0 + fin(\theta)$$

$$\partial\, fin (\theta) / \partial\theta > 0$$

For achieving such objects, according to another aspect of the present invention, there is provided a fan impeller forming mold for forming a fan impeller having a plurality of blades arranged around a fan axis so that each of the blades is inclined at a predetermined angle along to a rotating direction with respect to the fan axis, said fan impeller forming mold comprising mold base portion and a plurality of blade forming cavities each having a bottom end portion, a leading end portion opposite to the bottom end portion and an inner surface portion connecting the leading end portion and the bottom end portion, each of said blade forming cavities being annularly arranged around a central axis of the mold base portion corresponding to the fan axis so as to be inclined at the predetermined angle along to the rotating direction with respect to the central axis, characterized in that said inner surface portion of each of said blade forming cavities includes a farthest inner surface edge portion which is the farthest portion from the central axis in the inner surface portion and a closest inner surface edge portion which is the closest portion to the central axis In the inner surface portion, said farthest inner surface edge portion of each of said blade forming cavities is formed on the basis of a first locus drawn by using a line segment R' out0 as a radius of curvature and of a predetermined draft taper, said line segment R' out0 connecting an end of the leading end side of the farthest inner surface edge portion and the central axis and said closest inner surface edge portion of each of said blade forming cavities is formed on the basis of a second locus drawn by using a line segment R' in0 as a radius of curvature and of a predetermined draft taper, said line segment R' in0 connecting an end of the leading end side of the closest inner surface edge portion and the central axis.

In preferred embodiments of this another aspect, when angle ($\theta$) from R' out0 with reference to the central axis is taken as a variable, said first locus (R' out ($\theta$)) of the farthest inner surface edge portion of each of said blade forming cavities with respect to the central axis is formed on the basis of the R' out0 and the draft taper f' out (θ) so as to satisfy the following expressions =

$$R' \text{ out } (\theta) < R' \text{ out } 0 - f' \text{ out } (\theta)$$

$$\partial f' \text{ out } (\theta) / \partial\theta > 0$$

and that when angle (θ) from R' in0 with reference to the central axis is taken as a variable, said second locus ( R' in (θ)) of the closest inner surface edge portion of each of said blade forming cavities with respect to the central axis is formed on the basis of the R' in0 and the draft taper f' in (θ) so as to satisfy the following expressions:

$$R' \text{ in } (\theta) > R' \text{ in } 0 + f' \text{ in}(\theta)$$

$$\partial f' \text{ in } (\theta) / \partial\theta > 0$$

For the purpose of achievement of the such objects, according to another aspect of the present invention, there is provided a fan impeller forming mold for forming a fan impeller having a plurality of blades arranged around a fan axis so that each of the blades is inclined at a predetermined angle along to a rotating direction with respect to the fan axis, said fan impeller forming mold comprising mold base portion and a plurality of blade forming cavities each having a bottom end portion, a leading end portion opposite to the bottom end portion and an inner surface portion connecting the leading end portion and the bottom end portion, each of said blade forming cavities being annularly arranged around a central axis of the mold base portion corresponding to the fan axis so as to be inclined at the predetermined angle along to the rotating direction with respect to the central axis, characterized in that said inner surface portion of each of said blade forming cavities includes a farthest inner surface edge portion which is the farthest portion from the central axis in the inner surface portion and a closest inner surface edge portion which is the closest portion to the central axis in the inner surface portion, and that said mold base portion is provided with parting lines for radially dividing the mold base portion into mold cavity elements at portions of the mold base portion where the blade forming cavities are formed, whole shape of said parting lines between an adjacent elements in respective divided mold cavity elements being formed into a helical shape along the inclined direction of the blade forming cavities.

With a view to achieving the such objects, according to another aspect of the present invention, there is provided manufacturing method of a fan impeller forming mold for forming a fan impeller which comprises a plate and a plurality of blades each having a bottom end portion mounted on one side surface of the plate, a leading end portion opposite to the bottom end portion and a side surface portion connecting the leading end portion and the bottom end portion, each of said blades being annularly arranged around a fan axis of the fan impeller so that each of the blades is inclined at a predetermined angle along to a rotating direction with respect to the fan axis, said side surface portion of each of said blades including an outer edge portion which is the farthest portion from the fan axis in the side surface portion and an inner edge portion which is the closest portion to the fan axis in the side surface portion, said outer edge portion and inner edge portion being curved outward with respect to the fan axis, respectively, characterized by comprising the steps of preparing an electrode for an electrical discharge machining having a substantially identical shape to a shape of each of said plurality of fan impellers, preparing a workpiece for the fan impeller forming mold, and forming a plurality of blade forming cavities on the workpiece by electric discharge machining using the electrode in such a manner that each of the blades is annularly arranged around a central axis of the workpiece corresponding to a fan axis of the fan impeller.

To achieve the the such objects, according to another aspect of the present invention, there is provided a transverse fan formed by concentrically arranging a plurality of fan impellers between a pair of end plates for integrally rotating the plurality of fan impellers around a fan axis so as to provide an air blow from the transverse fan impeller, each of said plurality of fan impellers comprising plate and a plurality of blades each of which is annularly arranged around the fan axis so that each of the blades is inclined at a predetermined angle along to the rotating direction with respect to the fan axis, characterized in that said inclined directions of respective blades of fan impellers which are adjacent each other in the plurality of fan impellers are so set that the inclined directions thereof are opposite direction from each other with respect to the fan axis.

In preferred embodiments of this another aspect, number of said fan impellers is even, said inclined directions of respective blades of the fan impeller adjacent to one of the end side plates are so set that an air flow provided from the fan impeller adjacent thereto is deflected toward the one of the end side plates from the direction orthogonal to the fan axis, and that said inclined directions of respective blades of the fan impeller adjacent to the other of the end side plates are so set that an air flow provided from the fan impeller adjacent thereto is deflected toward the other of the end side plates from the direction orthogonal to the fan axis.

According to the transverse fan of the above aspects of the present invention, the outer edge portion and the inner edge portion of each blades of the fan impeller are curved outward with respect to the fan axis, respectively. Therefore, the gap at the nose can be substantially uniformly formed in the direction of the length of the fan axis and the radius of the fan can be also formed substantially uniformly without loss at the central portion of the outer edge portion. This makes it possible to prevent the occurrence of the static pressure distribution caused by changes in the nose gap so as to considerably reduce chances of abnormal noises and also to enable the transverse fan to supply more air blow than the conventional transverse fans.

Further, according to the fan impeller forming mold of these aspects of the present invention, the farthest inner surface edge portion and the closest inner surface edge portion of each of the blade hole cavities are formed so that they are curved according to the loci of the predetermined curvature radii R' outO and R' inO on the basis of the draft tapers, respectively. This makes it possible to manufacture a fan impeller which has blades of a larger skew tilting angle by using the fan impeller forming mold which has the blade hole cavities [of this embodiment], and a transverse fan equipped with the fan impeller.

Furthermore, according to the fan impeller forming mold of these aspects of the present invention, when the fan impeller having the blades is ejected from the impeller forming mold while turning the fan impeller, the whole of the blades are rotationally moved in that the moving locus of the whole of the blades is a helical shape. Therefore, since the whole shape of the parting lines between the adjacent elements in respective divided mold cavity elements is formed into a helical shape along the inclined direction of the blade forming cavities, the blades of the fan impeller are ejected along the helical shape of the parting lines smoothly and easily so as not to occur undercuts at the parting lines.

In addition, according to the manufacturing method of the fan impeller forming mold in accordance with the present invention, the blade forming cavities in which the outer edge portion and inner edge portion are curved outward with respect to the fan axis, can be easily cut by using the electrode having substantially the same shape as that of each of the blades. Therefore, the fan impeller forming mold for manufacturing the fan impeller including the blades each of which has a large tilting angle and which has the outer edge portion and the inner edge portion curved outward with respect to the fan axis can be easily manufactured.

Furthermore, in accordance with these aspects of the present invention, the inclined directions of respective blades of fan impellers which are adjacent each other are opposite direction from each other with respect to the fan axis.

Therefore, the transverse fan is capable of supplying stable air flow in both areas of the inside of the room which face both ends of the fan impellers along the direction of the fan axis through the fan impellers adjacent to the ends or through the fan impellers adjacent to the foregoing fan impellers. As a result, uniform and wide air blowing area and good air blow amount can be achieved without causing the surging phenomenon.

BRIEF DESCRIPTION OF THE DRAWINGS

Other objects and aspects of the invention will become apparent from the following description of embodiments with reference to the accompanying drawings in which:

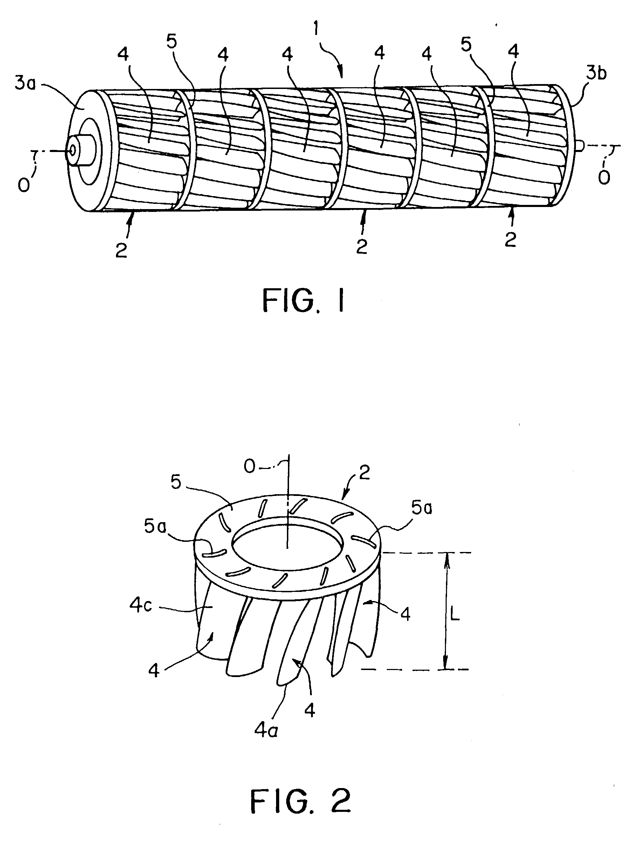

Fig. 1 is a perspective view illustrating a schematic configuration of a transverse fan in accordance with a first embodiment of the present invention;

Fig. 2 is a perspective view illustrating of a fan impeller constituting the transverse fan shown in Fig. 1;

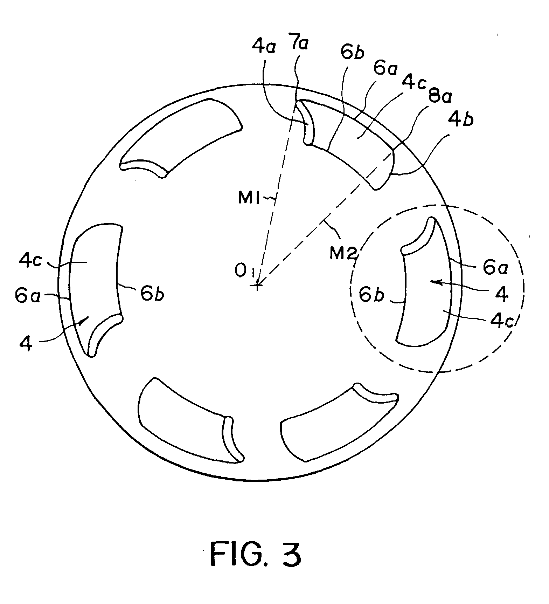

Fig. 3 is a view of the the fan impeller from the side of the blades disposed surface of the fan impeller;

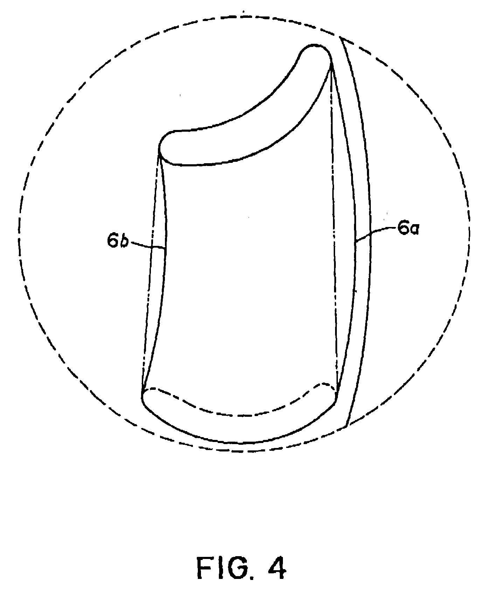

Fig. 4 is an enlarged view of a blade circled with dashed line in Fig. 3;

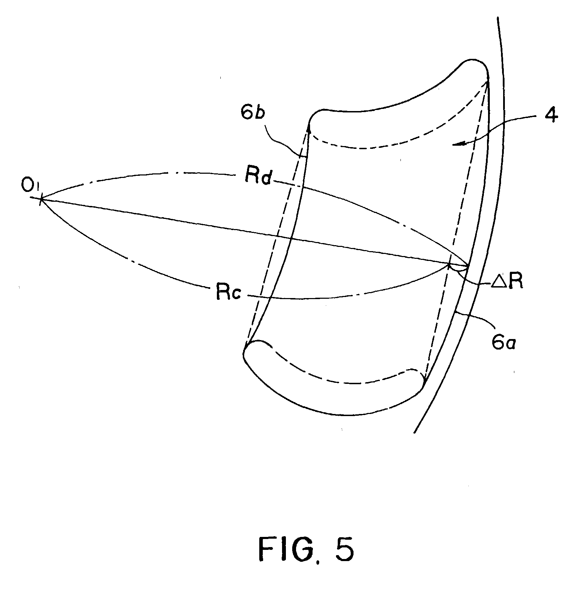

Fig. 5 is a view illustrating the comparison between a fan radius of the transverse fan of the present embodiment and a fan radius of a conventional transverse fan;

Pig. 6 is a view showing a nose gap of the transverse fan of the present embodiment;

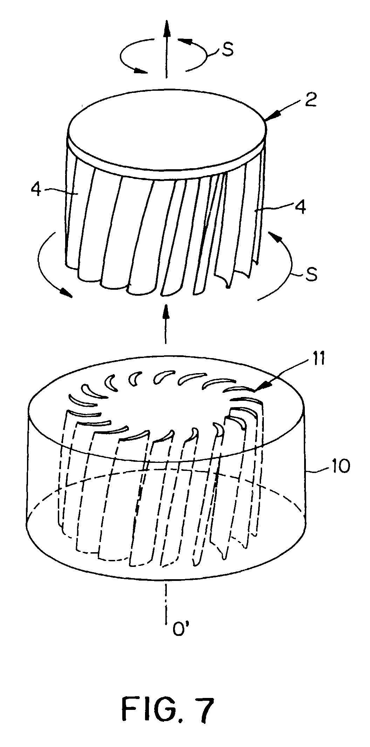

Fig. 7 is a perspective view showing a fan impeller constituting the transverse fan of the present invention which is being ejected out of a lower die (fan impeller mold cavity);

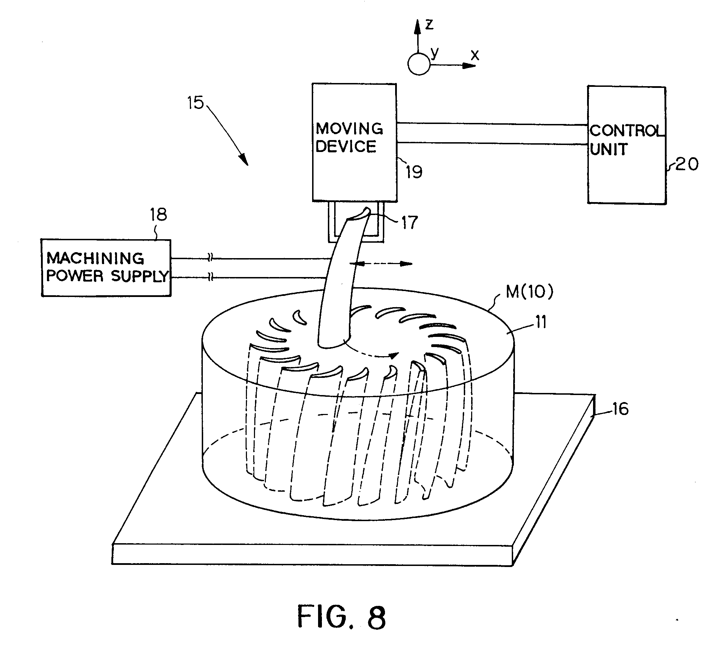

Fig. 8 is a perspective view (partially block diagram) showing the schematic constitution of an electric discharge machine for manufacturing the lower die (fan impeller mold cavity) for forming the fan impeller constituting the transverse fan of the present embodiment;

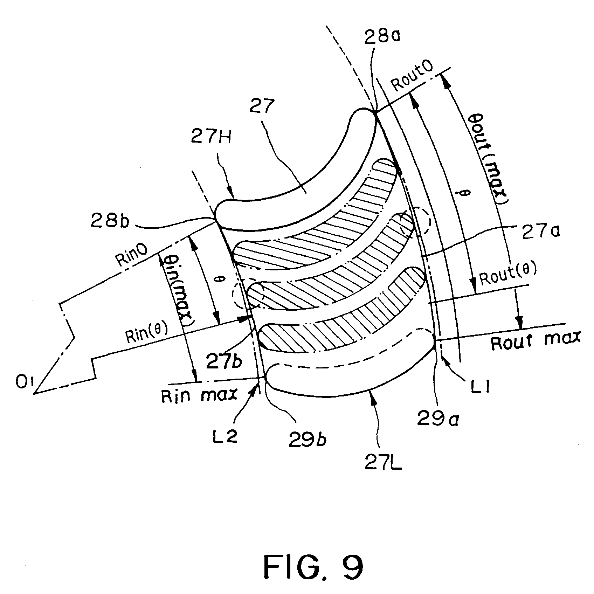

Fig. 9 is an enlarged view of a blade of a fan impeller of a transverse fan according to a second embodiment;

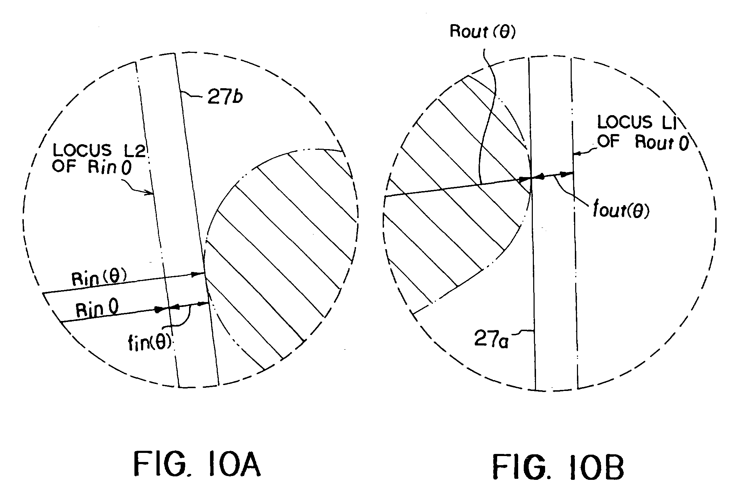

Fig. 10 (A) is an enlarged view of a portion circled with a dashed line in an inner peripheral edge of the blade shown in Fig. 9;

Fig. 10 (B) is an enlarged view of a portion circled with a dashed line in an outer peripheral edge of the blade shown in Fig. 9;

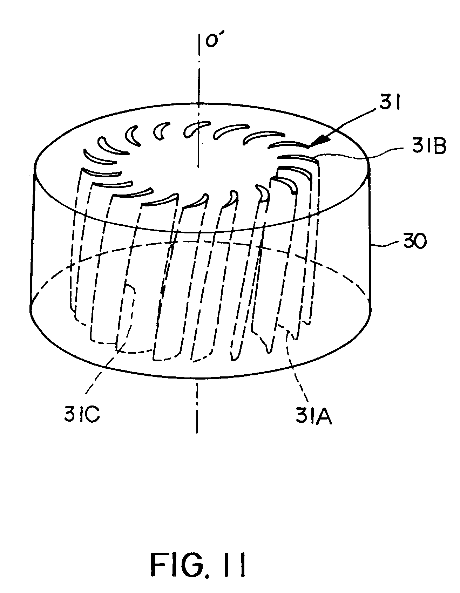

Fig. 11 is a view of a fan impeller mold cavity for molding the fan impeller which has the blades according to the second embodiment;

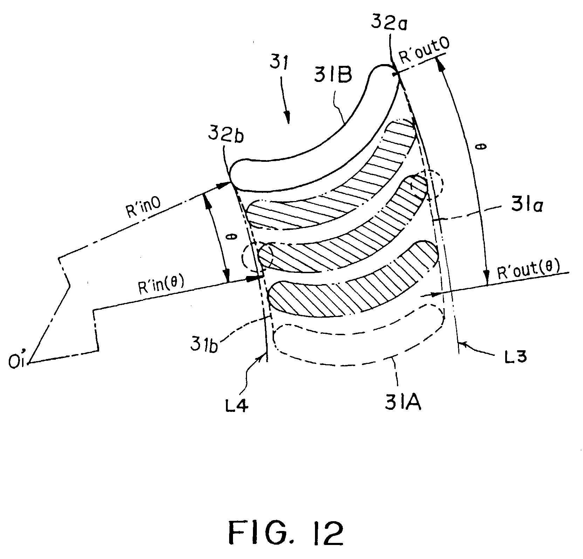

Fig. 12 is an enlarged view of a blade hole cavity in Fig. 11;

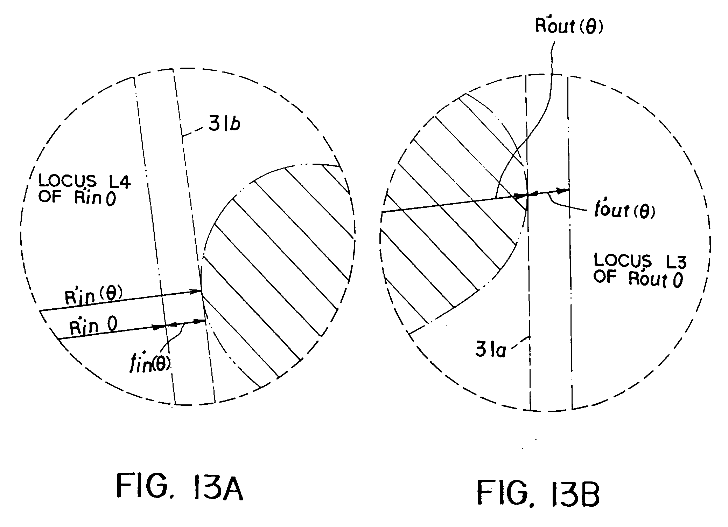

Fig. 13 (A) is an enlarged view of a portion circled with a dashed line in the closest inner surface peripheral edge of the blade hole cavity shown in Fig. 12;

Fig. 13 (B) is an enlarged view of a portion circled with a dashed line in the farthest inner surface peripheral edge of the blade hole cavity shown in Fig. 12;

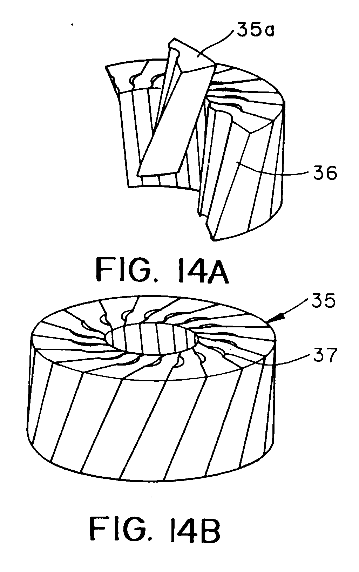

Figs. 14(A) and 14(B) are views showing a parting line in the case where the fan impeller mold cavity having tilting skew blades in accordance with the present invention is formed by divided mold cavity elements;

Figs. 15(A)-15(C) are views showing a parting line in the case where the fan impeller mold cavity having tilting skew blades in accordance with the present invention is formed by divided mold cavity elements;

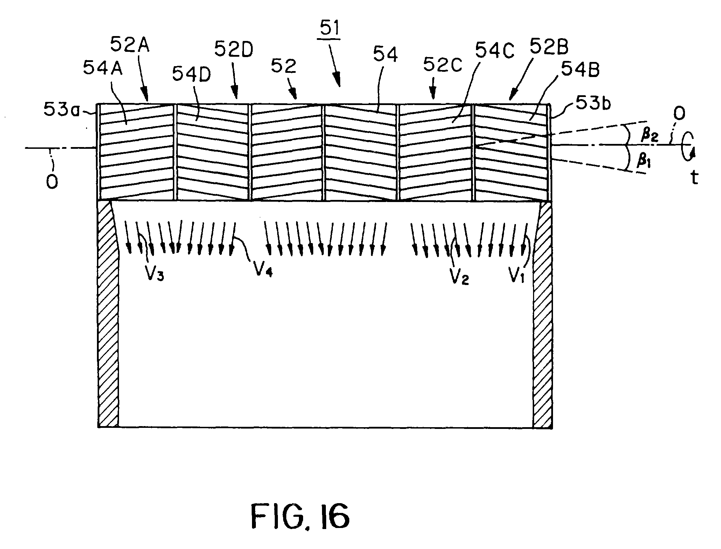

Fig. 16 is a front view illustrating a schematic configuration of a transverse fan of a third embodiment;

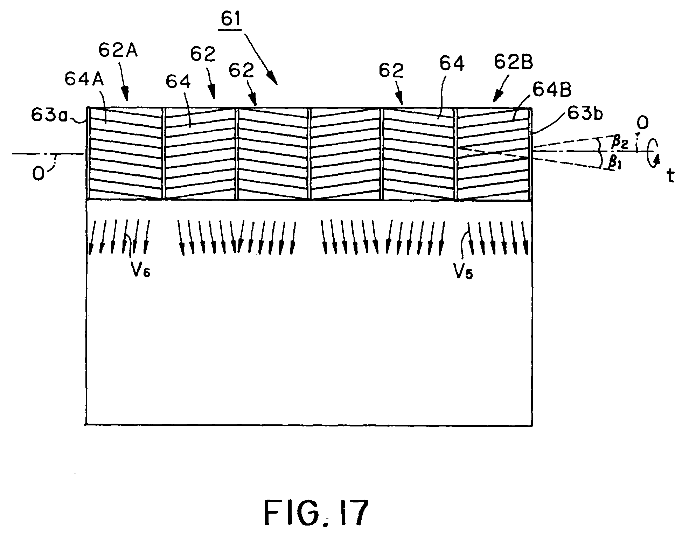

Fig. 17 is a front view illustrating a schematic configuration of a transverse fan based on a modification of the third embodiment;

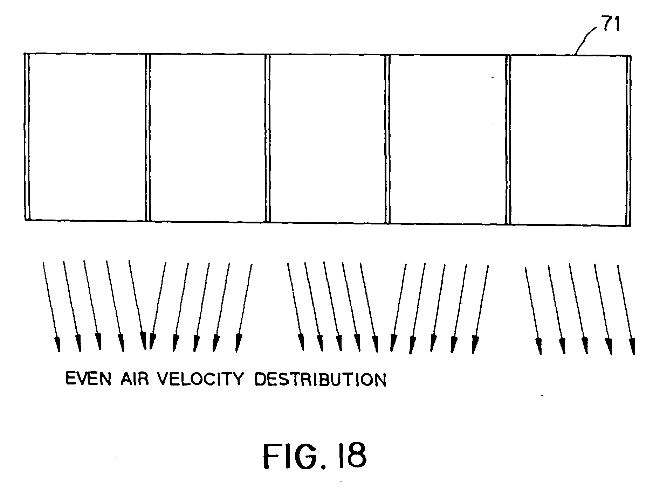

Fig. 18 is a front view illustrating of a schematic general configuration of the transverse fan based on the modification of the third embodiment;

Fig. 19 is a longitudinal sectional view schematically showing an example of an indoor unit in an air conditioner;

Fig. 20 is a perspective view illustrating a transverse fan which has conventional tilting skew blades;

Fig. 21 is a front view illustrating the transverse fan which has conventional tilting skew blades;

Fig. 22 is a front view illustrating the transverse fan which has conventional tilting skew blades;

Fig. 23 is a side view illustrating a fan impeller which has the tilting skew blades constituting the transverse fan shown in Fig. 20;

Fig. 24 is a view of the the fan impeller shown in Fig. 23 from the side of the blades disposed surface of the fan impeller;

Fig. 25 is an enlarged view of a blade of the fan impeller shown in Fig. 24;

Fig. 26 is a view illustrating a fan radius in the conventional transverse fan shown in Fig. 20 through Fig. 25;

Fig. 27 is a diagram showing a nose gap observed when the transverse fan equipped with the fan impeller which have the conventional tilting skew blades is rotated;

Figs. 28 (A) and 28(B) are enlarged views of the portion circled by a dashed line in Fig. 27 at different blade points;

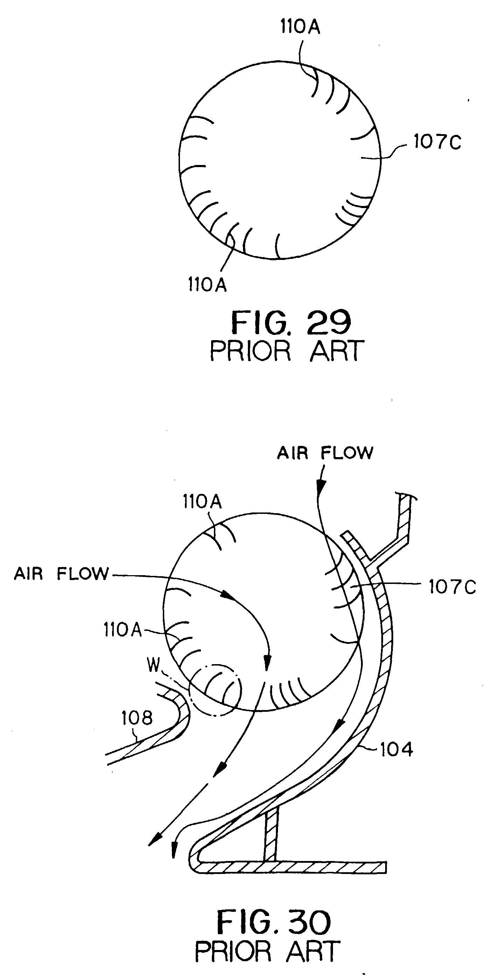

Fig. 29 is a diagram showing a transverse fan which employs tilting skew blades arranged at random pitches;

Fig. 30 is a diagram showing a whirl generated between a blade and a nose;

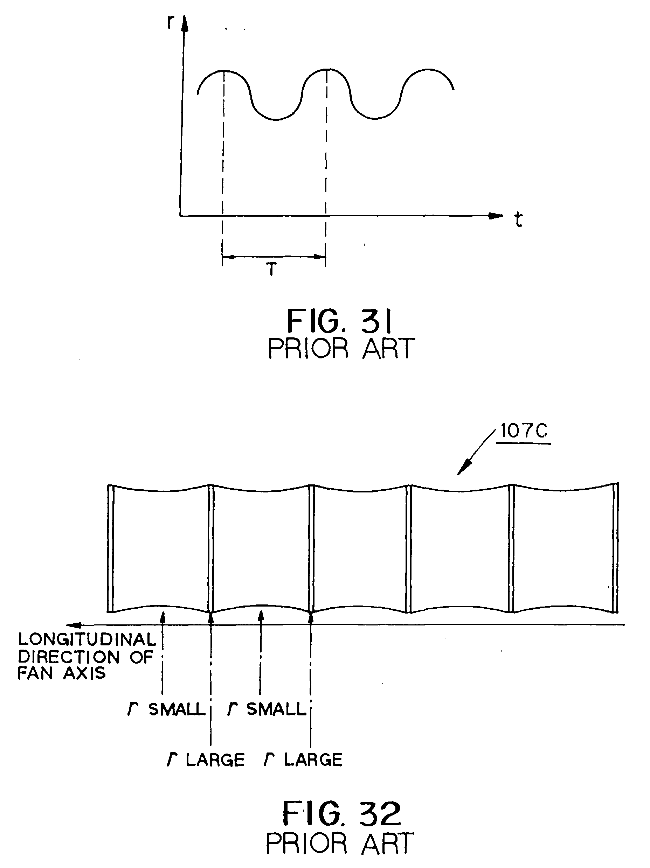

Fig. 31 is a diagram showing periodical changes in the size of the whirl (radius of the whirl);

Fig. 32 is a diagram showing the changes in the radius of the whirl in the longitudinal direction of the transverse fan;

Fig. 33 is a diagram showing the structure of undercuts which take place in the tilting skew blade of a conventional fan impeller; and

Fig. 34 is an enlarged view of a tilting skew blade with a larger draft taper in the conventional fan impeller.

## DESCRIPTION OF THE PREFERRED EMBODIMENTS

Preferred embodiments of the present invention will now be described with reference to the drawings.

(First Embodiment)

Fig. 1 is a perspective view showing a schematic general configuration of a transverse fan of the embodiment.

A transverse fan 1 is a transverse fan which is ideally suited for being incorporated as an indoor fan in an indoor unit 100, which is arranged in a room, of, for example, an air conditioner shown in Fig. 18. The transverse fan 1 is formed by coaxially joining a plurality of fan impellers 2 in a body by, for instance, an impeller joint method. More specifically, the transverse fan 1 has a pair of right and left side plates 3a and 3b on the ends thereof. A plurality of fan impellers 2, which are composed of side plates 5 having a plurality of blades 4, are concentrically provided integrally between the side plates 3a and 3b,

The transverse fan 1 is rotatably constructed around a fan axis O. As the transverse fan 1 rotates, an air flow is supplied in a direction which is substantially orthogonal to the fan axis O.

As shown in Fig. 2, each fan impellers 2 has the side plate 5 having an annular shape, for example, a disc-shaped configuration which is so arranged as to be substantially orthogonal to the fan axis O. The plurality of the blades 4 each has a leading end portion 4a, a bottom end portion 4b opposite to the leading end portion 4a and side surface portion 4c connecting the leading end portion 4a and the bottom end portion 4, each of said the blades 4 having circular-arc shape in cross section along a direction orthogonal to the fan axis O.

In one surface (outer surface) of the side plate 5, fitting concave portions 5a are formed for fitting (mounting) the leading end portions 4a of the respective blades 4 of the fan impeller 2' which is adjacent to the fan impeller 2. On the other surface (inner surface) of the side plate 5, each of the blades 4 is annularly provided at its bottom end positions 4b on the other surface thereof around the fan axis O at a predetermined disposing pitch and the plurality of blades 4 are mounted at its bottom end portions 4b on the other surface thereof so as to stand thereon. The distance from the side plate 5 to the leading end portion 4a of the blades 4 is represented as L. In Fig. 1, the end plate of the leftmost impeller serves also as the side plate.

The shape of the blades 4 will now be described in detail. Fig. 3 shows the fan impeller 2 from the side of the blades 4 disposed surface thereof. To make Fig. 3 clearly and to expand the blade portions, the fan impeller 2 having six blades 4 is shown in Fig. 3. Fig. 4 is an enlarged view of the portion circled with the dashed line of in Fig. 3.

According to Fig. 3 and Fig. 4, the blades 4 are inclined at a predetermined angle in the rotating direction (peripheral direction) with respect to the fan axis O, respectively. This tilt (inclined) angle is referred to as "skew tilt angle", hereinafter.

Each of the blades 4 of this embodiment is characterized by the contours of a peripheral edge 6a which is the farthest portion in the side surface portion 4c from the fan axis O (referred to as "outer peripheral edge") and a peripheral edge 6b which is the closest portion in the side surface portion 4c to the fan axis O (referred to as "inner peripheral edge). That is, each of the outer peripheral edge and the inner peripheral edge of the conventional blade is straight as indicated by the two-dot chain lines as shown in Fig. 4. In addition, for making substantially equal a line segment M1 connecting an end 7a of the outer peripheral edge 6a of the leading end portion 4a and a center O1 on the fan axis O in the inner surface of the side plate 5 with a line segment M2 connecting an end 8a of the outer peripheral edge 6a of the bottom end portion 4b and the center O1, the length of the outer peripheral edge 6a is longer than that of the inner peripheral edge 6b.

In contrast to this, the outer peripheral edge 6a and the inner peripheral edge 6b of the blade 4 of this embodiment are curved outward with respect to the fan axis O as illustrated in Fig. 4.

This configuration provides substantially uniform radius Ra of the fan, which is the distance from the fan axis O, for example the center O1 of the fan impeller 2, to the outer peripheral edge 6a of the blade, at any point on the outer peripheral edge 6a. Further, when the radius of the conventional fan is denoted as Rc, radius Ra of the fan, for example, at the central portion of the outer peripheral edge 6a will be "Ra = Rc + R " as illustrated in Fig. 5, meaning that Ra is larger than radius Rc of the conventional fan by R.

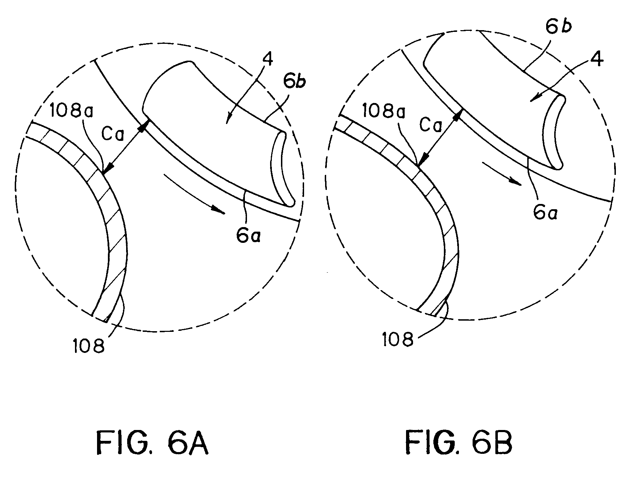

Hence, as shown in Figs. 6 (A) and (B), because fan radius Ra of the plate 4 is substantially uniform, nose gap Ca is always formed substantially uniform regardless of the position of the outer peripheral edge 6a of the blade 4 opposing a nose angular portion 108a. As a result of that, the static pressure distribution caused by the changes in the nose gap can be prevented, thus making it possible to markedly reduce the occurrence of abnormal noises being produced.

In addition, a loss ( R) of the fan radius at the central portion of the outer peripheral edge 6a which has conventionally produced can be eliminated, so that more blow can be supplied than available with the conventional blades.

The configuration provides the advantages set forth below since the outer peripheral edge 6a and the inner peripheral edge 6b of the blade 4 are curved outward with respect to the fan axis O.

Specifically, when the fan impeller 2 having the tilting skew blades 4 of the configuration is manufactured by molding and when the molding (the fan impeller 2) is ejected out of a lower die (fan impeller molding cavity) 10 while turning the molding (the fan impeller 2) around the axis (the direction of rotation is indicated by arrow "s") as shown in Fig. 7, the fan impeller 2 can be ejected out smoothly from the lower die 10 along the direction of rotation "s" since the outer peripheral edge 6a and the inner peripheral edge 6b of the blade 4 are curved. Hence, in this configuration, it is no longer necessary to make the draft tapers unnecessarily large as in the case of the conventional fan impeller shown in Fig. 33, and even if a largest possible skew tilting angle is used, no undercut will result. Therefore, maximum effect for restraining the blade pitch noises can be attained without causing a problem such as a decreased air blow volume.

Moreover, since there will be no undercut problem in the transverse fan 1 equipped with a plurality of fan impellers 2 which have the skew blades 4 of this configuration, the fan impellers 2 can be manufactured by molding and removed from the lower die easily and the fan impellers 2 can be joined coaxially by the impeller joint method thereby to make the transverse fan 1. Hence, unlike the case of the helical skew fan having the conventional helical skew blades, the impeller joint method can be used to permit easier manufacture of fans. Further, there is no need to apply an external twisting force in the fan manufacturing process, so that no twisting residual stress stays in the fan, allowing higher reliability of the fan to be achieved.

To manufacture the lower die (the fan impeller mold cavity) 10 for making the fan impellers constituting the transverse fan shown in Fig. 7, the inner surface of each of blade hole cavities 11 for forming the blades must be shaped into a curved surface so as to curve the outer peripheral edges and the inner peripheral edges of the blades, respectively This cannot be accomplished by the wire cutting which is a prior art.

To cope with this, in this embodiment, the shape of an electrode for an electric discharge machining is devised to manufacture the lower die. Namely, as shown in Fig. 8, electric discharge machining equipment 15 is provided with a machining table 16 on which a workpiece (mold base) M immersed in a metalworking fluid, not shown, is mounted, an electric discharge machining electrode 17 which is opposed to the workpiece M to machine the workpiece M by performing pulse electric discharge, a machining power supply 18 which is the power supply of the electric discharge machining electrode 17, a moving mechanism 19 which moves the electric discharge machining electrode 17 horizontally and vertically and rotates the electrode 17 in the directions (x, y, z) shown in Fig. 8, and a control unit 20 for controlling the moving and rotating position of the electric discharge machining electrode 17.

In this configuration, an electrode machined to have a substantially identical shape (similar shape) to that of the blade is used for the electric discharge machining electrode 17. The electric discharge machining electrode 17 is rotated and vertically moved by the moving mechanism 19 under the control by the control unit 20 to cut the workpiece M so that the cavities 11 are formed in the workpiece M.

Thus, it can be easily achieved to cut the workpiece M for making the cavities 11, while it was difficult to be formed by the wire cutting of the prior art.

(Second Embodiment)

Fig. 9 is an enlarged view of a blade 27 of a fan impeller 26 of a transverse fan 25 in accordance with the present embodiment. Fig. 10 (A) is an enlarged view of the portion of the inner peripheral edge of the blade 27, the portion being circled with a dashed line; and Fig. 10 (B) is an enlarged view of the portion of the outer peripheral edge of the blade 27, the portion being circled with a dashed line. This embodiment is different from the transverse fan of the first embodiment only in the configuration of the blades 27 of the fan impeller 26; the rest of the configuration is almost the same as the first embodiment, and therefore, the description thereof will be omitted.

As shown in Fig. 9, if the line segment connecting an end 28a of an outer peripheral edge 27a of a leading end portion 27H of the blade 27 and the center O1 on the axis O in the inner surface of the fan impeller 26 is represented as Rout0, then the outer peripheral edge 27a of each blades 27 of this embodiment is curved according to the locus drawn from the end 28a of the leading end portion 27H by using Rout0 as the radius of curvature (i.e. the locus with no draft taper; refer to the two-dot chain line L1 in Fig. 9). Moreover, the curved shape of the outer peripheral edge 27a is formed on the basis of the draft taper.

Likewise, as shown in Fig. 9, if the line segment which connects an end 28b of an inner peripheral edge 27b of the leading end portion 27H and the center O1 is represented as Rin0, then the inner peripheral edge 27b of each blades 27 of this embodiment is curved according to the locus drawn from the end 28b by using Rin0 as the radius of curvature (i.e. the locus with no draft taper; refer to the two-dot chain line L2 in Fig. 9). Moreover, the curved shape of the inner peripheral edge 27b is formed on the basis of the draft taper.

That is, as shown in Fig. 10 (B), when angle ($\theta$) from Rin0 is taken as a variable, locus (Rout ($\theta$)) of the outer peripheral edge 27a with respect to the fan axis O is represented by expression (1) and expression (2) given below by using the locus of the foregoing curvature radius Rout0 and draft taper (fout ($\theta$)).

$$\text{Rout} (\theta) < \text{Rout0} - \text{fout} (\theta) \qquad (1)$$

$$\partial \text{ fout} (\theta) / \partial \theta \geqq 0 \qquad (2)$$

Where $\lceil \partial$ fout ($\theta$) / $\partial \theta \rfloor$ represents that $\partial$ fout ($\theta$) is differentiated to the $\theta$ direction.

To maximize the fan radius, draft taper fout ($\theta$) may be set to 0 (in other words, locus Rout ($\theta$) of the outer peripheral edge 27a matches with the locus of a predetermined curvature radius Rout0). However, if the draft taper fout ($\theta$) may be set to 0, then it is difficult to remove the molding from the die. For this reason, the draft taper fout ($\theta$) is set, for example, as follows:

$$\text{fout} (\theta) = A \cdot \theta \cdot L / \theta \text{ out(max)} \qquad (3)$$

where A represents a general draft taper used for a standard straight blade, $\theta$ out(max) represents the angle formed between Rout0 and a line segment (Rout max) which connects an end 29a of the outer peripheral edge 27a of a bottom end portion 27L mounted on the inner surface of the side plate 5 of the blade 27 and the center O1 (see Fig. 9).

The same applies to the inner peripheral edge 27b. Specifically, as shown in Fig. 10 (A), when angle ($\theta$) from Rin0 with reference to the fan axis O is taken as a variable, locus (Rin ($\theta$)) of the inner peripheral edge 27b is represented by expression (8) and expression (9) given below by using the locus of the curvature radius Rin0 and draft taper (fin ($\theta$)).

$$\text{Rin} (\theta) > \text{Rin0} + \text{fin}(\theta) \qquad (4)$$

$$\partial \text{ fin} (\theta) / \partial \theta \geqq 0 \qquad (5)$$

Where $\lceil \partial$ fin ($\theta$) / $\partial \theta \rfloor$ represents that $\partial$ fin ($\theta$) is differentiated with reference to the $\theta$ direction.

As the same of the outer peripheral edge 27a, draft taper fin ($\theta$)is set, for example, as follows:

$$\text{fin} (\theta) = A \cdot \theta \cdot L / \theta \text{ in(max)} \qquad (6)$$

where $\theta$ in(max) represents the angle formed between Rin0 and a line segment (Rin max) which connects an end 29b of the inner peripheral edge 27b of the bottom end 27L mounted on the inner surface of the side plate 5 of the blade 27 and the center O1 (see Fig. 9).

According to expressions (1) through (6) given above, the outer peripheral edge 27a and the inner peripheral edge 27b of the blade 27 are curved based on the loci of the predetermined curvature radii Rout0 and Rin0, while taking into account the draft tapers fout ($\theta$) and fin ($\theta$), respectively; therefore, the same advantages as those available with the first embodiment can be obtained, the advantages including the uniformity in the fan radius and an increased fan radius at the central portion of the outer peripheral edge.

Furthermore, according to expressions (2) and (3), and (5) and (6), the values of draft tapers fout ($\theta$) and fin ($\theta$) are not 0; as grows larger (that is, as the bottom end 27L of the blade 27 is approached), the values of draft tapers fout ($\theta$) and fin ($\theta$) increase. Therefore, the formed fan impeller 26 which has the blades 27 can be easily removed from the die.

Thus, in the fan impeller equipped with the blades described with reference to Fig. 9 and Fig. 10, the outermost peripheral edges and the innermost peripheral edges of the blades thereof are curved on the basis of the draft tapers. Therefore, it does not occur undercuts which are observed in the fan impeller having the conventional tilting blades, and it makes possible to manufacture a fan impeller with blades which have a larger skew tilting angle.

To manufacture by molding the fan impeller 26 having the blades 27 described in conjunction with Fig. 9 and Fig. 10, a blade hole cavity 31 of a lower die (fan impeller mold cavity) 30 for the fan impeller 26 is matched to the shape of the blades 27 and the aforesaid electric discharge machining or other similar machining is used for forming the fan impeller.

Fig. 11 shows the fan impeller mold cavity 30 having a plurality of blade hole cavities 31. Each of the blade hole cavities 31 is annularly arranged around a central axis of the impeller mold cavity 30 corresponding to the fan axis O so as to be inclined at the predetermined angle along to the rotating direction of the fan impeller with respect to the central axis O' corresponding to the fan axis O.

Fig. 12 shows an enlarged view of one of the blade hole cavities 31 in Fig. 11. Further, Fig. 13 (A) is an enlarged view of the portion of the closest inner surface peripheral edge, which will be discussed later, of the blade hole cavity 31 in Fig. 12, the portion being circled by a dashed line. Fig. 13 (B) is an enlarged view of the portion of the farthest inner surface peripheral edge, which will be discussed later, of the blade hole cavity 31 in Fig. 12, the portion being circled by a dashed line.

In Figs. 11 and 12, the blade hole cavity 31 is provided with a bottom end portion 31A, a leading end portion (an opening end portion) 31B opposite to the bottom end portion 31A and an inner surface portion 31C connecting to the bottom end portion 31A and leading end portion 31B. The blade hole cavity 31 also has circular-arc shape in cross section along a direction orthogonal to the central axis O'.

Further, if the locus of a peripheral edge 31a which is the farthest from the cavity axis O' in the inner surface portion 31C of the blade hole cavity 31 (referred to as "the farthest Inner surface peripheral edge), that is, the locus of the portion constituting the outer peripheral edge 27a of the blade 27; see the locus of the farthest inner surface portion peripheral edge 31a indicated by the dashed line in Figs. 12 and 13(B) is represented as R' out $(\theta)$, then the locus R' out $(\theta)$ is curved according to the locus drawn from an end 32a of a blade ejection side of the farthest inner surface peripheral edge 31a by using, as the curvature radius, a line segment R' out0 which connects the end 32a thereof and a center O1' on the cavity axis O' in a bottom surface of the impeller mold cavity 30 (i.e. the locus which includes no draft taper; refer to the locus L3 indicated by the two-dot chain line in Figs. 12 and 13(B)). The curved shape of the locus of the farthest inner surface peripheral edge 31a is formed on the basis of the draft taper.

Furthermore, if the locus of a peripheral edge 31b which is the closest to the cavity axis O' in the inner surface 31C of the blade hole cavity 31 (referred to as "the closest inner surface peripheral edge), that is the locus of the portion constituting the inner peripheral edge 27b of the blade 27; see the locus of the closest inner surface peripheral edge 31b indicated by the dashed line in Fig. 12 and 13(A) is represented as R' in $(\theta)$, then the locus R' in $(\theta)$ is curved according to the locus drawn from an end 32b of a blade ejection side of the closest inner surface peripheral edge 31b by using, as the curvature radius, a line segment R' in0 which connects the end 32b thereof and the center O1' (i.e. the locus which includes no draft taper; refer to the locus L4 indicated by the two-dot chain line in Figs. 12 and 13(A)). The curved shape of the locus of the closest inner surface peripheral edge 31b is formed on the basis of the draft taper.

That is, as shown in Fig. 13 (B), R' out $(\theta)$ is represented by expression (7) and expression (8) given below by using the locus of the foregoing curvature radius R' out0 and draft taper ( f' out $(\theta)$).

$$R' \text{ out } (\theta) < R' \text{ out0 - f' out } (\theta) \tag{7}$$

$$\partial \text{ f' out } (\theta) / \partial\theta > 0 \tag{8}$$

Likewise, as shown in Fig. 13 (A), R' in $(\theta)$ is represented by expression (9) and expression (10) given below by using the locus of the foregoing curvature radius R' in0 and draft taper (f' in $(\theta)$).

$$R' \text{ in } (\theta) > R' \text{ in0 + f' in}(\theta) \tag{9}$$

$$\partial \text{ f' in } (\theta) / \partial\theta > 0 \tag{10}$$

f' out$(\theta)$ and f' in$(\theta)$ can be set by referring to, for example, expressions (3) and (6) given above (the depth of the hole cavity 31 may be set to L).

Thus, the farthest inner surface peripheral edge (corresponding to the outer peripheral edge of the blade) 31a and the closest inner surface peripheral edge 31b (corresponding to the inner peripheral edge of the blade) of the blade hole cavity 31 are formed so that they are curved according to the loci of the predetermined curvature radii R' out0 and R' in0 on the basis of the draft tapers, respectively, thus making it possible to manufacture a fan impeller which has blades of a larger skew tilting angle by using the blade hole cavity of this embodiment, and a transverse fan equipped with the fan impeller.

In the embodiments described above, the lower die for forming the fan impeller (fan impeller mold cavity) is manufactured by the electric discharge machining or other similar machining. However, the present invention is not limited thereto. It may be manufactured as follows.

At first, a workpiece for forming the fan impeller cavity having a cylindrical shape is prepared. Next, the workpiece is divided into workpiece elements (impeller cavity elements) so as to form a blade hole cavity portion in each of the impeller cavity elements by, for example wire cutting. Thus, the fan impeller mold cavity is formed by composing all of the impeller cavity elements in such a manner that the blade hole cavity portions of the impeller cavity elements which are adjacent each other forms the blade hole cavity.

Conventionally, however, fan impeller mold cavity elements are formed such that the divided surface (parting line) between adjoining fan impeller mold cavity elements becomes a plane (straight). For this reason, in this conventional method, the fan impeller, which is equipped with the tilting skew blades described in detail in the foregoing embodiments, is ejected from the mold while turning it; therefore, a problem may occur wherein the parting line develops an undercut.

When making the fan impeller mold cavity for manufacturing the fan impeller, which has the tilting skew blades of the embodiment, by dividing the workpiece into the impeller cavity elements, for instance, radially along the radial direction of the workpiece with reference to the central axis at portions of the workpiece where the blade hole cavity portions are formed, as shown in Figs. 14(A) and 14(B), the whole shape of the parting lines 36 between the adjacent elements in respective divided fan impeller mold cavity elements 35a each of which forms the blade hole cavities 37 is formed into a helical shape along the tiling direction of the blade hole cavity 37. The fan impeller mold cavity elements 35a are composed so as to form the fan impeller mold cavities 35, said blade hole cavity 37 being annularly arranged around the central axis of the impeller mold cavity 35 corresponding to the fan axis O so as to be inclined at the predetermined angle along to the rotating direction of the fan impeller with respect to the central axis.

That is, when the fan impeller having the tilting skew blades is ejected from the impeller mold cavity 35 while turning the fan impeller, the whole of the tilting skew blades are rotationally moved in that the moving locus of the whole of the tilting skew blades is a helical shape.

Therefore, since the whole of the parting lines 36 is formed into the helical shape corresponding to the moving locus of the whole of the skew tilting blades, the blade portions of the fan impeller are ejected along the helical shape of the parting line 36 smoothly and easily so as not to occur undercuts at the parting line 36.

As in the case of Figs. 14(A) and 14(B), Figs. 15(A) through 15(C) illustrate another example for making the fan impeller mold cavity for manufacturing the fan impeller, which has the tilting skew blades of the embodiment, by dividing the workpiece into the impeller mold cavity elements, forming the blade hole cavity on each of the impeller cavity elements, and combining all of the impeller mold cavity elements thereby to form the impeller mold cavity.

According to Fig. 15 (A) through 15(C), a cylindrical workpiece is annularly and concentrically divided into two impeller mold cavity elements, that is, cylindrical section 42 and a hollow cylindrical section 43 at a portion where the blade hole cavities 41 are formed. The whole shape of the parting lines 44 between the adjacent elements, namely, the cylindrical section 42 and the hollow cylindrical section 43 is formed into a helical shape along the tilting direction of the blade hole cavity 41, as shown in Figs. 15(A) through 15(C). The cylindrical section 42 and the hollow cylindrical section 43 are composed so as to form the fan impeller cavity 40, said blade hole cavities 41 being annularly arranged around the central axis of the impeller mold cavity 40 corresponding to the fan axis O so as to be inclined at the predetermined angle along to the rotating direction of the fan impeller with respect to the central axis.

That is, when the fan impeller having the tilting skew blades is ejected from the impeller mold cavity 40 while turning the fan impeller, the whole of the tilting skew blades are rotationally moved in that the moving locus of the whole of the tilting skew blades is a helical shape.

Therefore, since the whole of the parting lines 44 is formed into the helical shape corresponding to the moving locus of the whole of the skew tilting blades, the blade portions of the fan impeller are ejected along the helical shape of the parting line 44 smoothly and easily so as not to occur undercuts at the parting line 44.

Further, in the respective embodiments described above, the tilting skew blades are vertically provided annularly at the predetermined installing pitch. However, the present invention is not limited thereto. For instance, as shown in Fig. 28, the tilting skew blades may be provided annularly at random pitches. In this case, as described previously, the tilting skew blades 4, 27 of the embodiments provide substantially uniform nose gap. Therefore, the changes in the size of the whirl caused by the changes in the nose gap do not take place. As a result, an increase in abnormal noise can be obviated. Hence, only the advantage of the whirl dispersion based on the random pitches can be obtained, allowing high-frequency abnormal noises to be reduced.

(Third Embodiment)

Fig. 16 is a front view illustrative of a schematic general configuration of a transverse fan of this embodiment.

The transverse fan 51 is a transverse fan which is ideally suited for being incorporated as an indoor fan in an indoor unit 100, which is arranged in a room, of, for example, an air conditioner shown in Fig. 19.

The transverse fan 51 is composed of a plurality of fan impellers 52 by combining them in a body, for example, the impeller joint method. More specifically, the transverse fan 51 has a pair of right and left side plates 53a and 53b on the ends thereof. A plurality of fan impellers 52, which have a plurality of blades 54, are provided concentrically and integrally between the side plates 53a and 53b.

A plurality (e.g. six) of fan impellers 52, which are provided as a single assembly, are adapted to rotate integrally around a fan axis O. As the fan impellers 52 rotate in, for example, a direction of arrow t, an air blow is supplied in a direction which is substantially orthogonal to the fan axis O.

A plurality of blades 54 of the respective fan impellers 52, each of which has circular-arc shape in horizontal cross section, are annularly provided around the fan axis O at a desired installing pitch and the plurality of the blades 54 are so provided as to stand on the inner surface of the fan impeller 52. The blades 54 are inclined at a predetermined angle in the peripheral direction with respect to the fan axis O (this tilting angle is referred to as "skew tilting angle").

In this embodiment, the skew tilting angle of the plurality of blades 54 of the fan impellers 52 with respect to the fan axis O is opposite from each other in adjoining fan impellers 52.

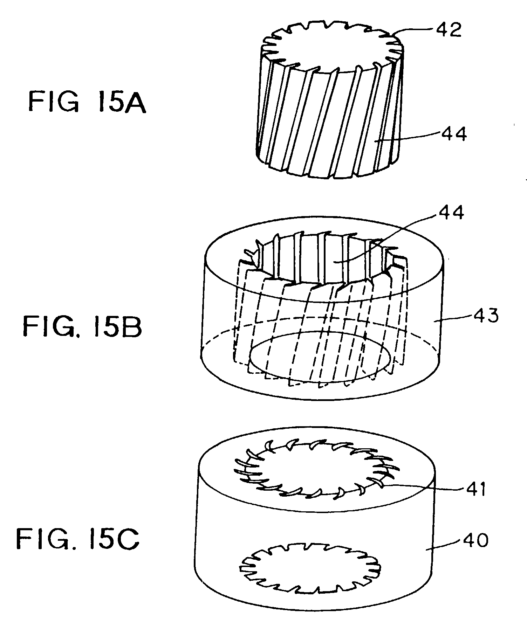

For instance, as shown in Fig. 15, a blade 54B of a fan impeller 52B adjacent to a right-hand side plate (right plate) 53b in Fig. 16 is disposed inclined at a skew tilting angle $\beta1$ with respect to the fan axis O. On the other hand, a blade 54C of a fan impeller 52C adjacent to the fan impeller 52B is disposed inclined at a skew tilting angle $\beta2$ with respect to the fan axis O. Thus, $\beta1$ and $\beta2$ are directed oppositely from each other with respect to the fan axis O (in Fig. 16, $\beta1$ is downward, while $\beta2$ is upward).

Further, for instance, a blade 54A of a fan impeller 52A adjacent to the left-hand plate (left plate) 53a in Fig. 15 has the skew tilting angle $\beta2$. A blade 54D of a fan impeller 52D adjacent to the fan impeller 52A has the skew tilting angle 1.

As a result, as shown in Fig. 16, when all fan impellers 52 rotate as one piece in the direction of arrow t, in the fan impeller 52B adjacent to the right side plate 53b, an air flow v1 is deflected toward the left side plate 53a, while in the fan impeller 52C adjacent to the fan impeller 52B, an air flow v2 is deflected toward the right side plate 53b.

Hence, at the right-hand area of the inside of the room which faces the right-hand end of the fan impeller 52B in the axial direction in Fig. 16, stable air blow is provided from air flow v2 which has been deflected by the fan impeller 52C, thus making it possible to restrain the surging phenomenon.

Likewise, in the fan impeller 52A adjacent to the left side plate 53a, an air flow v3 is deflected toward the right side plate 53b, while in the fan impeller 52D adjacent to the fan impeller 52A, an air flow v4 is deflected toward the left side plate 53b. Hence, at the left-hand area of the inside of the room faces the light-hand end of the fan impeller 52A in the axial direction in Fig. 16, stable air blow is provided from air flow v4 which has been deflected by the fan impeller 52D, also allowing the surging phenomenon to be restrained.

Thus, according to the embodiment, the skew tilting directions of the blades 54, 54 of the adjoining fan impellers 52, 52 are set so that they are opposite from each other in order to deflect the air flows supplied through the adjoining fan impellers 52, 52 in directions opposite from each other. This makes it possible to reduce the surging phenomenon and to achieve stable blow velocity, blow amount, and blow area.

Moreover, the transverse fan 51 having the configuration of this embodiment, wherein the skew tilting directions of the blades 54 of adjoining fan impellers 52 are set such that they are opposite from each other, can be easily accomplished by employing the impeller joint method which is a well-known fan manufacturing method. Therefore, it can be manufactured without adding to manufacturing cost.

A modification of the embodiment is shown in Fig. 17. According to this modification, the number of fan impellers 62 in a transverse fan 61 is set to an even number (six), and a blade 64B of a fan impeller 62B adjacent to a right side plate 63b is disposed such that it is inclined at the skew tilting angle $\beta2$ with respect to the fan axis O, while a blade 64A of a fan impeller 62A adjacent to a left side plate 62a is disposed such that it is inclined at $\beta1$ with respect to the fan axis O. The rest of the configuration is identical to that shown in Fig. 16. That is, the skew tilting angles of the blades 64 of adjoining fan impellers are set oppositely from each other.

Owing to this configuration, when all fan impellers 62 rotate in a body in the direction of arrow t, in the fan impeller 62B adjacent to the right side plate 63b, an air flow v5 is deflected toward the right side plate 63b, while in the fan impeller 62A adjacent to the left side plate 63a, an air flow v6 is deflected toward the left side plate 63a.

This means that, in the configuration, the air blowing area is expanded along the direction of the fan axis of the inside of the room, permitting markedly reduced surging at both areas in the inside of the room which face the left-hand end of the fan impeller 62A and the right-hand end of the fan impeller 62B, respectively.

In this embodiment, the tilting skew blades having straight outer and inner peripheral edges may be used for the skew tilting blades 54 and 64 of the fan impellers 52 and 62, or the tilting skew blades having the curved outer and inner peripheral edges, which have been described in the first and second embodiments, may be used. Especially in the case of a transverse fan 71 based on the configuration shown in Fig. 15 wherein the tilting skew blades with the curved outer and inner peripheral edges are used, a substantially uniform nose gap is maintained, thus providing the even air velocity distribution as shown in Fig. 18.

While the present invention has been particularly shown and described with reference to the preferred embodiments thereof, it will be understood by those skilled in the art that the foregoing and other changes in form and details can be made therein without departing from the spirit and scope of the invention.

## Claims

1. A transverse fan formed by concentrically arranging a plurality of fan impellers for integrally rotating the plurality of fan impellers around a fan axis; each of said plurality of fan impellers comprising:

   a plate; and
   a plurality of blades each having a bottom end portion mounted on one side surface of the plate, a leading end portion opposite to the bottom end portion and a side surface portion connecting the leading end portion and the bottom end portion, each of said blades being annularly arranged around the fan axis so that each of the blades is inclined at a predetermined angle along to the rotating direction with respect to the fan axis,
      characterized in that said side surface portion of each of said blades includes an outer edge portion which is the farthest portion from the fan axis in the side surface portion and an inner edge portion which is the closest portion to the fan axis in the side surface portion, said outer edge portion and inner edge portion being curved outward with respect to the fan axis, respectively.

2. A transverse fan according to claim 1, characterized in that each of said blades has a circular-arc shape in cross section along to a direction orthogonal to the fan axis.

3. A transverse fan according to claim 2, characterized in that each of said plate has an annular shape and is so arranged as to be substantially orthogonal to the fan axis.

4. A transverse fan according to claim 3, characterized in that each of said blades is annularly arranged at a predetermined pitch.

5. A transverse fan according to claim 3, characterized in that each of said blades is annularly arranged at random pitches.

6. A transverse fan according to claim 3, characterized in that said outer edge portion of each of said blades is formed on the basis of a first locus drawn by using a line segment Rout0 as a radius of curvature and of a predetermined draft taper, said line segment Rout0 connecting an end of the leading end side of the outer edge portion and the fan axis and said inner edge portion of each of said blades is formed on the basis of a second locus drawn by using a line segment Rin0 as a radius of curvature and of a predetermined draft taper, said line segment Rin0 connecting an end of the leading end side of the inner edge portion and the fan axis.

7. A transverse fan according to claim 6, characterized in that when angle $(\theta)$ from Rout0 with reference to the fan axis is taken as a variable, said first locus ($Rout (\theta)$) of the outer edge portion of each of blades with respect to the fan axis is formed on the basis of the Rout0 and the draft taper fout $(\theta)$ so as to satisfy the following expressions:

$$Rout (\theta) < Rout0 - fout (\theta)$$

$$\partial fout (\theta) / \partial \theta > 0$$

and that when angle $(\theta)$ from Rin0 with reference to the fan axis is taken as a variable, said second locus ($Rin (\theta)$) of the inner edge portion of each of blades with respect to the fan axis is formed on the basis of the Rin0 and the draft taper fin $(\theta)$ so as to satisfy the following expressions:

$$Rin (\theta) > Rin0 + fin(\theta)$$

$$\partial fin (\theta) / \partial \theta > 0$$

8. A fan impeller forming mold for forming a fan impeller having a plurality of blades arranged around a fan axis so that each of the blades is inclined at a predetermined angle along to a rotating direction with respect to the fan axis, said fan impeller forming mold comprising:

   mold base portion; and
   a plurality of blade forming cavities each having a bottom end portion, a leading end portion opposite to the bottom end portion and an inner surface portion connecting the leading end portion and the bottom end portion, each of said blade forming cavities being annularly arranged around a central axis of the mold base portion corresponding to the fan axis so as to be inclined at the predetermined angle along to the rotating direction with respect to the central axis,
      characterized in that said inner surface portion of each of said blade forming cavities includes a farthest inner surface edge portion which is the farthest portion from the central axis in the inner surface portion and a closest inner surface edge portion which is the closest portion to the central axis in the inner surface portion, said farthest inner surface edge portion of each of said blade forming cavities is formed on the basis of a first locus drawn by using a line segment R' out0 as a radius of curvature and of a predetermined draft taper, said line segment R' out0 connecting an end of the leading end side of the farthest inner surface edge portion and the central axis and said closest inner surface edge portion of each of said blade forming cavities is formed on the basis of a second locus drawn by using a line segment R' in0 as a radius of curvature and of a predetermined draft taper, said line segment R' in0 connecting an end of the leading end side of the closest inner surface edge portion and the central axis.

9. A fan impeller forming mold according to claim 8, characterized in that when angle ($\theta$) from R' out0 with reference to the central axis is taken as a variable, said first locus (R' out ($\theta$)) of the farthest inner surface edge portion of each of said blade forming cavities with respect to the central axis is formed on the basis of the R' out0 and the draft taper f' out ($\theta$) so as to satisfy the following expressions =

$$R' \text{ out } (\theta) < R' \text{ out0} - f' \text{ out } (\theta)$$

$$\partial f' \text{ out } (\theta) / \partial \theta > 0$$

and that when angle ($\theta$) from R' in0 with reference to the central axis is taken as a variable, said second locus ( R' in ($\theta$)) of the closest inner surface edge portion of each of said blade forming cavities with respect to the central axis is formed on the basis of the R' in0 and the draft taper f' in ($\theta$) so as to satisfy the following expressions:

$$R' \text{ in } (\theta) > R' \text{ in0} + f' \text{ in}(\theta)$$

$$\partial f' \text{ in } (\theta) / \partial \theta > 0$$

10. A fan impeller forming mold for forming a fan impeller having a plurality of blades arranged around a fan axis so that each of the blades is inclined at a predetermined angle along to a rotating direction with respect to the fan axis, said fan impeller forming mold comprising:

    mold base portion; and
    a plurality of blade forming cavities each having a bottom end portion, a leading end portion opposite to the bottom end portion and an inner surface portion connecting the leading end portion and the bottom end portion, each of said blade forming cavities being annularly arranged around a central axis of the mold base portion corresponding to the fan axis so as to be inclined at the predetermined angle along to the rotating direction with respect to the central axis,

    characterized in that said inner surface portion of each of said blade forming cavities includes a farthest inner surface edge portion which is the farthest portion from the central axis in the inner surface portion and a closest inner surface edge portion which is the closest portion to the central axis in the inner surface portion, and that said mold base portion is provided with parting lines for radially dividing the mold base portion into mold cavity elements at portions of the mold base portion where the blade forming cavities are formed, whole shape of said parting lines between an adjacent elements in respective divided mold cavity elements being formed into a helical shape along the inclined direction of the blade forming cavities.

11. A manufacturing method of a fan impeller forming mold for forming a fan impeller which comprises a plate and a plurality of blades each having a bottom end portion mounted on one side surface of the plate, a leading end portion opposite to the bottom end portion and a side surface portion connecting the leading end portion and the bottom end portion, each of said blades being annularly arranged around a fan axis of the fan impeller so that each of the blades is inclined at a predetermined angle along to a rotating direction with respect to the fan axis, said side surface portion of each of said blades including an outer edge portion which is the farthest portion from the fan axis in the side surface portion and an inner edge portion which is the closest portion to the fan axis in the side surface portion, said outer edge portion and inner edge portion being curved outward with respect to the fan axis, respectively, characterized by comprising the steps of:

    preparing an electrode for an electrical discharge machining having a substantially identical shape to a shape of each of said plurality of fan impellers;
    preparing a workpiece for the fan impeller forming mold; and
    forming a plurality of blade forming cavities on the workpiece by electric discharge machining using the electrode in such a manner that each of the blades is annularly arranged around a central axis of the workpiece corresponding to a fan axis of the fan impeller.

12. A transverse fan formed by concentrically arranging a plurality of fan impellers between a pair of end plates for integrally rotating the plurality of fan impellers around a fan axis so as to provide an air blow from the transverse fan impeller, each of said plurality of fan impellers comprising:

a plate; and
a plurality of blades each of which is annularly arranged around the fan axis so that each of the blades is inclined at a predetermined angle along to the rotating direction with respect to the fan axis,

characterized in that said inclined directions of respective blades of fan impellers which are adjacent each other in the plurality of fan impellers are so set that the inclined directions thereof are opposite direction from each other with respect to the fan axis.

13. A transverse fan according to claim 12, characterized in that number of said fan impellers is even, said inclined directions of respective blades of the fan impeller adjacent to one of the end side plates are so set that an air flow provided from the fan impeller adjacent thereto is deflected toward the one of the end side plates from the direction orthogonal to the fan axis, and that said inclined directions of respective blades of the fan impeller adjacent to the other of the end side plates are so set that an air flow provided from the fan impeller adjacent thereto is deflected toward the other of the end side plates from the direction orthogonal to the fan axis.

14. A transverse fan according to claim 12, characterized in that each of said respective blades of the plurality of fan impellers comprises a plate and a plurality of blades each having a bottom end portion mounted on one side surface of the plate, a leading end portion opposite to the bottom end portion and a side surface portion connecting the leading end portion and the bottom end portion, each of said blades being annularly arranged around the fan axis so that each of the blades is inclined at a predetermined angle along to the rotating direction with respect to the fan axis, said side surface portion of each of said blades including an outer edge portion which is the farthest portion from the fan axis in the side surface portion and an inner edge portion which is the closest portion to the fan axis in the side surface portion, and said outer edge portion and inner edge portion being curved outward with respect to the fan axis, respectively.

FIG. 1

FIG. 2

FIG. 3

FIG. 4

FIG. 5

FIG. 6A

FIG. 6B

FIG. 7

FIG. 8

FIG. 9

FIG. IOA

FIG. IOB

EP 0 816 687 A2

FIG. 11

**FIG. 12**

FIG. 13A

FIG. 13B

FIG. 14A

FIG. 14B

FIG 15A

42

44

FIG. 15B

44

43

FIG. 15C

41

40

FIG. 16

EP 0 816 687 A2

FIG. 17

FIG. 18

EVEN AIR VELOCITY DESTRIBUTION

FIG. 19
PRIOR ART

**FIG. 20**
PRIOR ART

**FIG. 21**
PRIOR ART

**FIG. 22**
PRIOR ART

FIG. 23
PRIOR ART

FIG. 24
PRIOR ART

FIG. 25
PRIOR ART

**FIG. 26**
PRIOR ART

**FIG. 27**
PRIOR ART

FIG. 28A
PRIOR ART

FIG. 28B
PRIOR ART

## FIG. 29
### PRIOR ART

## FIG. 30
### PRIOR ART

FIG. 31
PRIOR ART

107C

LONGITUDINAL
DIRECTION OF
FAN AXIS

$\Gamma$ SMALL   $\Gamma$ SMALL

$\Gamma$ LARGE   $\Gamma$ LARGE

FIG. 32
PRIOR ART

**FIG. 33**
PRIOR ART

**FIG. 34**
PRIOR ART